# EUROPEAN PATENT APPLICATION

(11) **EP 2 934 019 A1**
(43) Date of publication of application: **21.10.2015**
(21) Application number: 14164896.4
(22) Date of filing: 16.04.2014
(51) Int. Cl.: H04N 21/442, H04N 21/482, H04N 21/472, H04N 21/262, H04N 21/231, H04N 5/765

(54) **System and method for television signal recording**

(71) Applicant: Advanced Digital Broadcast S.A., 1292 Geneva (CH)
(72) Inventor: Kozlowski, Tomasz, 65-119 Zielona Gora (PL)
(74) Representative: Blonski, Pawel

(57) **Abstract**

A method for television signal recording the method comprising the steps of: providing access to at least one catch up TV service; generating a signal comprising a graphical user interface of an electronic program guide; awaiting selection of a program for recording; the method further comprising the step of: checking whether the program, selected for recording, is available for retrieval via one of the at least one catch up TV service; storing a reference information to the program, the reference allowing for retrieval of the selected program from a selected program catch up TV service; making the selected program available as a recording entry on a list of recordings; monitoring expiry of the program in the selected catch up TV service; retrieving and recording the program, on a storage device, sufficiently prior to the expiry of the program in the catch up TV service.

## Description

The present invention relates to a system and method for television signal recording. In particular the system refers to a simple zapper set-top box, which by default lacks internal storage sufficient to store data of a television show and at the same time has a capability of connecting to a source of catch up TV service.

Catch up TV service is, according to Wikipedia, a Video On Demand (VOD), in which TV shows are available for a period of days after the original television broadcast. Services provided by incumbent broadcasting agents use this terminology when offering typically time limited on VOD options on schedules aligned with their main transmissions.

By default catch up TV services are not meant for recording, therefore, there exists a problem of television signal recording, wherein the signal is available from catch up TV service.

It would be thus desirable to provide an improved method for television signal recording.

The object of the present invention is a method for television signal recording the method comprising the steps of: providing access to at least one catch up TV service; generating a signal comprising a graphical user interface of an electronic program guide; awaiting selection of a program for recording; the method further comprising the step of: checking whether the program, selected for recording, is available for retrieval via one of the at least one catch up TV service; storing a reference information to the program, the reference allowing for retrieval of the selected program from a selected program catch up TV service; making the selected program available as a recording entry on a list of recordings; monitoring expiry of the program in the selected catch up TV service; retrieving and recording the program, on a storage device, sufficiently prior to the expiry of the program in the catch up TV service.

Preferably, the storage device is an external storage device to the television signal receiver.

Preferably, the method further comprises the step of reporting the program on the list of recordings as stored locally.

Preferably, the reference information comprises identifier of a show and an identifier of the catch up TV service.

Preferably, a textual or graphical indication is given, differentiating whether a recording, present on the list of recordings, has been effected by reference or by physical storage at the location where the television signal receiver is deployed.

Another object of the present invention is a computer program comprising program code means for performing all the steps of the method according to the present invention when said program is run on a computer.

Another object of the present invention is a computer readable medium storing computer-executable instructions performing all the steps of the method according to the present invention when executed on a computer.

Yet another object of the present invention is a system for television signal recording, the system comprising: a data bus communicatively coupled to internal as well as external modules and configured to communicate the modules among each other; a signal reception and processing module configured to receive the television signal; a memory communicatively coupled to the data bus; a controller for managing the internal as well as external modules; the system further comprising: the controller being configured to execute steps of the method according to the present invention; a return channel for providing commands to at least one catch up TV service; a catch up TV references register configured to store at least one reference information to the at least one selected program; a storage interface configured to allow bidirectional data exchange with a storage device.

Preferably, the storage interface is an external storage interface.

The present invention is shown by means of exemplary embodiments on a drawing, in which:
Fig. 1 presents a method according to the present invention;
Figs. 2A and 2B present examples of user interface for use with the present invention; and
Fig. 3 presents a system according to the present invention.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

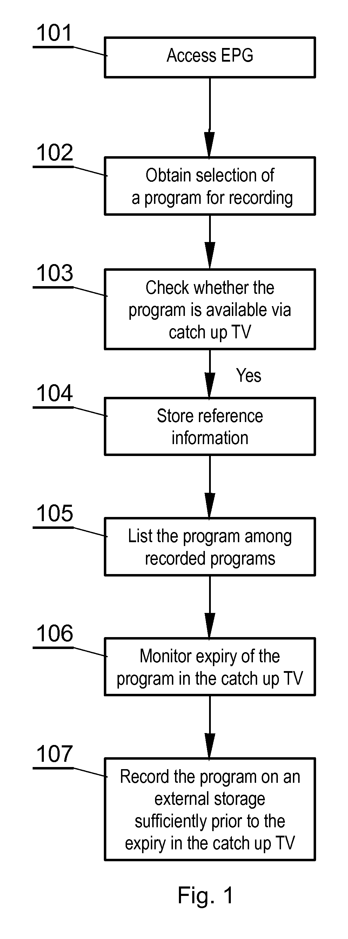

Fig. 1 presents a method according to the present invention. Typically an STB comprises a software called Electronic Program Guide. This software comprises a television schedule database and a graphical user interface that presents at least a portion of such schedule database for browsing for a user. In other words, an STB is generating a signal comprising a graphical user interface of an electronic program guide.

At step 101 an STB displays such EPG and subsequently, at step 102, the process awaits selection of a program for recording. Such selection is typically made by signals provided from a remote control unit. Alternatively, such selection may be automatic, based on output of a recommending engine taking into account user's viewing history.

Next, at step 103, the system checks whether the selected program is available for retrieval via a catch up TV service, to which the STB has access. In case the selected program is available via said catch up TV service, at step 104, there is stored a reference information to the selected program (eg. a link allowing for retrieval of the selected program from a selected program source). In its simplest form, this may be an identifier of a show. Additionally, such reference may include an identifier of a source as there may be a selection of catch up TV sources. Even further, such reference may include metadata of such program comprising title and/or availability information and/or description and/or parental rating.

As a result, the selected program is available as a recording entry 105 even though it is not physically available at the location where the STB is deployed. The selected program is listed among recorded programs and such list may be presented to a user via a suitable GUI.

Subsequently, the process executes at step 106, monitoring expiry of the program in the catch up TV service. For example, in case a show is recorded by reference as shown in step 101-105 on January 1^{st} 2015 and it expires in the catch up TV service on February 1^{st} 2015, the monitoring service should notify a controller that the program expires sufficiently in advance so that the system may decide whether the program should be stored. For example, a download scheduler (taking into account availability and/or download speed) may be used for that purpose in order to plan expiring downloads so that none of them is missed i.e. all are downloaded in full before they expire in the catch up TV service.

In case the program shall be retrieved and stored, at step 107, the program is recorded on an external storage sufficiently prior to the expiry in the catch up TV. After storing is complete, the program is reported on the list of recordings as stored locally and not by reference. The storage may be alternatively internal such as SSD, HDD, DVD RW storage or the like.

The described approach results in saving bandwidth as once stored catch up TV show will not be downloaded again and also saves storage space as a catch up TV show will only be stored locally when a user is interested in that show (by marking it as a recording) and when download is absolutely necessary due to its expiry.

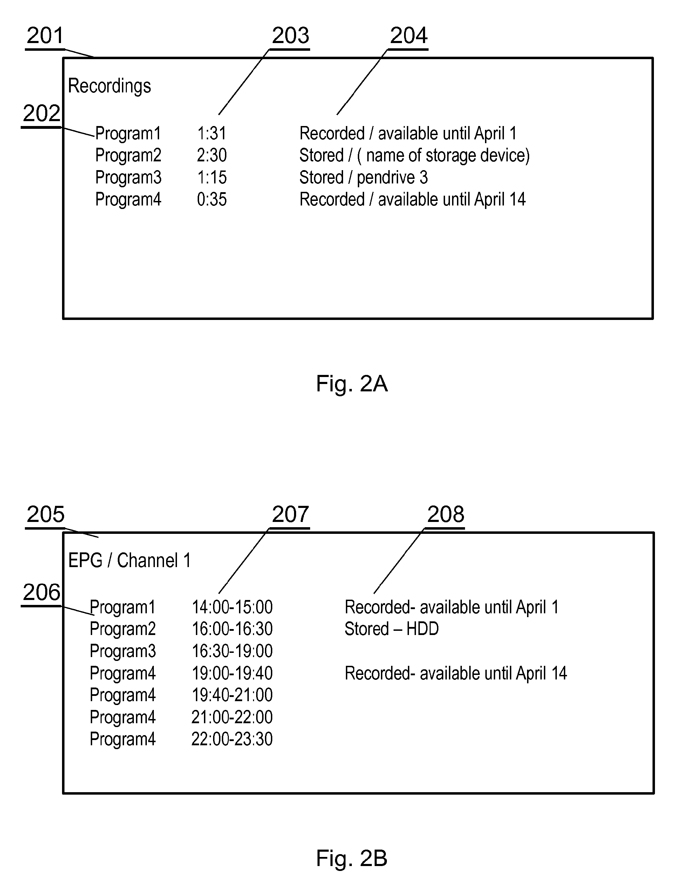

Figs. 2A and 2B present examples of a graphical user interface for use with the present invention. The GUI shown in Fig. 2A is a list of recordings 201 that have been made by a user. This list may be provided with listings of program titles 202 together with running time 203. Additionally, a textual or graphical indication 204 may be given, in order to differentiate whether a recording has been effected by reference or by physical storage at the location where the STB is deployed. Optionally, the indicator 204 may include information about show expiry date on catch up TV or identification of a used storage device.

The GUI shown in Fig. 2B is a sample EPG view 205 listing programs 206 available on a given television channel at given times 207. The system according to the present invention may check whether any listed program 206 is present on the recordings list 201 and a textual or graphical indication 208 may be given, in order to show whether a recording has been effected for this particular program by reference or by physical storage at the location where the STB is deployed.

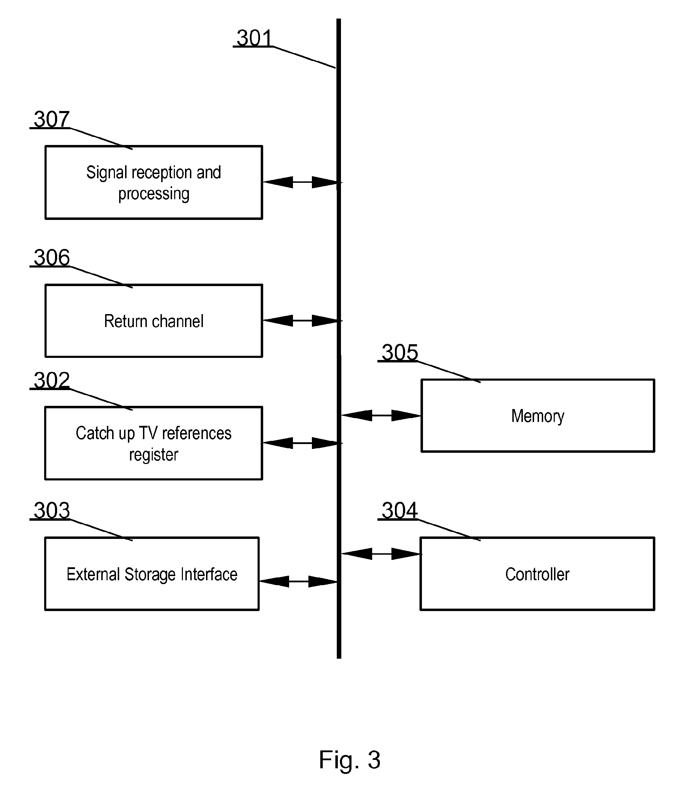

Fig. 3 presents a system according to the present invention. If implemented in hardware, as in an alternative embodiment, the present system can be implemented with any suitable combination of discrete logic circuits having logic gates for implementing logic functions upon data signals, such as an application specific integrated circuit (ASIC) having appropriate logic gates, a programmable gate array(s) (PGA) or a field programmable gate array (FPGA), etc.

The system comprises a data bus 301, that may communicate internal as well as external modules among each other. For example, a signal reception and processing module 307 may communicate with memory 305. The signal reception and processing module 307 comprises STB typical modules such as front-ends, demultiplexers, descramblers, decoders, audio/wideo output ports, OSD generator as well as a communication interface with a user such as remote control unit interface. Via this module there may be received the aforementioned television schedule database that is an essential part of an EPG.

The system further comprises a return channel 306 for providing commands to catch up TV services. Such return channel may be an Internet connection.

Additionally, the system comprises a Catch up TV references register 302, which is a memory that stores information determined at step 104 of the method according to the present invention.

Lastly, the system comprises an external storage interface 303 allowing for bidirectional data exchange with a suitable storage device such as a USB Hard Drive or a local network area NAS or the like. As previously explained, the storage may be internal to the television signal receiver.

It can be easily recognized, by one skilled in the art, that the aforementioned method for television signal recording may be performed and/or controlled by one or more computer programs. Such computer programs are typically executed by utilizing the computing resources of the device. The computer programs can be stored in a non-volatile memory, for example a flash memory or in a volatile memory (or otherwise a non-transitory computer readable medium), for example RAM and are executed by the processing unit. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

In addition, any combination of the appended claims in envisaged in the present application.

## Claims

1. A method for television signal recording the method comprising the steps of:
• providing access to at least one catch up TV service;
• generating (101) a signal comprising a graphical user interface of an electronic program guide;
• awaiting selection (102) of a program for recording;
the method being **characterized in that** it further comprises the step of:
• checking (103) whether the program, selected for recording, is available for retrieval via one of the at least one catch up TV service;
• storing (104) a reference information to the program, the reference allowing for retrieval of the selected program from a selected program catch up TV service;
• making (105) the selected program available as a recording entry on a list of recordings;
• monitoring (106) expiry of the program in the selected catch up TV service;
• retrieving and recording (107) the program, on a storage device, sufficiently prior to the expiry of the program in the catch up TV service.

2. The method according to claim 1 **characterized in that** the storage device is an external storage device to the television signal receiver.

3. The method according to claim 1 **characterized in that** the method further comprises the step of reporting (108) the program on the list of recordings as stored locally.

4. The method according to claim 1 **characterized in that** the reference information comprises identifier of a show and an identifier of the catch up TV service.

5. The method according to claim 3 **characterized in that** a textual or graphical indication (204) is given, differentiating whether a recording, present on the list of recordings, has been effected by reference or by physical storage at the location where the television signal receiver is deployed.

6. A computer program comprising program code means for performing all the steps of the method according to claim 1 when said program is run on a computer.

7. A computer readable medium storing computer-executable instructions performing all the steps of the method according to claim 1 when executed on a computer.

8. A system for television signal recording, the system comprising:
• a data bus (301) communicatively coupled to internal as well as external modules and configured to communicate the modules among each other;
• a signal reception and processing module (307) configured to receive the television signal;
• a memory (305) communicatively coupled to the data bus (301);
• a controller (304) for managing the internal as well as external modules;
the system being **characterized in that** it further comprises:
• the controller (304) being configured to execute steps of the method according to claim 1;
• a return channel (306) for providing commands to at least one catch up TV service;
• a catch up TV references register (302) configured to store at least one reference information to the at least one selected program;
• a storage interface (303) configured to allow bidirectional data exchange with a storage device.

9. The system according to claim 8 **characterized in that** the storage interface is an external storage interface (303).
